# EUROPÄISCHE PATENTANMELDUNG

(11) **EP 4 734 305 A1**
(43) Veröffentlichungstag der Anmeldung: **29.04.2026**
(21) Anmeldenummer: 25210682.8
(22) Anmeldetag: 23.10.2025
(51) Int. Cl.: H02G 3/08, H02G 3/14

(54) **ANSCHLUSSDOSE, INSBESONDERE FÜR EIN DATEN- UND KOMMUNIKATIONSNETZ**

(30) Priorität: 23.10.2024 DE 102024130918
(71) Anmelder: METZ CONNECT GmbH, 78176 Blumberg (DE)
(72) Erfinder: Bronner, Dennis, 78239 Rielasingen-Worblingen (DE)
(74) Vertreter: Westphal, Mussgnug & Partner Patentanwälte mbB

(57) **Zusammenfassung**

Anschlussdose (10), insbesondere für ein Daten- oder Kommunikationsnetz, aufweisend:
- ein Gehäuse (11), wobei das Gehäuse (11) ein Bodenteil (20) und ein schwenkbar am Bodenteil (20) angeordnetes Deckelteil (30), umfasst, wobei das Gehäuse (10) zwischen einer geöffneten und einer geschlossenen Position bewegbar ist,
- das Gehäuse (10) weist eine Öffnung (12) auf,
- das Deckelteil (30) weist eine erste Dichtung (60) und das Bodenteil (20) eine zweite Dichtung (70) auf, wobei die erste Dichtung (60) und die zweite Dichtung (70) zumindest teilweise aus einem verformbaren Material gebildet sind, **gekennzeichnet dadurch**, dass
- die erste Dichtung (60) oder die zweite Dichtung (70) in der geschlossenen Position des Gehäuses (11) die Öffnung (12) zumindest annähernd verschließt, und
- dass in der geschlossenen Position die zweite Dichtung (70) auf die die Öffnung (12) zumindest annähernd verschließende erste Dichtung (60) eine Kraft ausübt,
- oder dass in der geschlossenen Position die erste Dichtung (60) auf die die Öffnung (12) zumindest annähernd verschließende zweite Dichtung (70) eine Kraft ausübt.

## Beschreibung

Die Erfindung betrifft eine Anschlussdose, insbesondere für ein Daten- und Kommunikationsnetz, gemäß den Merkmalen des Patentanspruchs 1.

Anschlussdosen, insbesondere die elektrischen Elemente einer Anschlussdose, müssen gegenüber Schmutz und Flüssigkeiten abgedichtet sein. Das gilt umso mehr für Anschlussdosen welche, in rauen Umgebungen wie im Außenbereich, in Werkstätten oder in Fertigungshallen, eingesetzt werden.

Die Anforderungen an die Schutzart sind in Abhängigkeit von den Witterungsbedingungen und den Sicherheitsanforderungen unterschiedlich zu wählen. Eine gebräuchliche Quantifizierung zur Klassifizierung des Schutzgrads ist der International Protection Standard (IP-Standard). Der Standard wird durch die Norm IEC 60529 definiert und weist eine erste Ziffer, die den Schutz gegen Fremdkörper und Berührungen angibt und eine zweite Ziffer, die den Schutz gegen Wasser angibt, auf.

Bei rauen Witterungsbedingungen werden insbesondere Anschlussdosen mit der Schutzart IP44 gefordert. Eine solche Anschlussdose bietet Schutz gegen Fremdkörper mit einem Durchmesser größer als 1 mm und Schutz gegen allseitiges Spritzwasser.

Um eine Anschlussdose gegen äußere Witterungseinflüsse widerstandsfähiger zu machen, werden Dichtungen eingesetzt, die den Bereich der Öffnungen zum Einführen eines Kabels abdichten.

Beispielsweise wird in der DE 10 2020 123 338 A1 eine Anschlussdose mit Dichtungen gezeigt, wobei die Dichtungen unmittelbar im Bereich der Öffnung aufeinander gepresst werden.

Problematisch an einer solchen Anschlussdose ist, dass die geforderte Schutzart IP44 nicht eingehalten wird, da ein Prüfdraht mit einem Durchmesser von 1 mm zwischen den Dichtungen in einen Innenraum des Gehäuses hindurchgeführt werden kann.

Dieses Problem wird durch eine Anschlussdose, insbesondere für ein Daten- oder Kommunikationskabel mit den Merkmalen des Patentanspruchs 1 gelöst.

Vorteilhafte Ausgestaltungen und Weiterbildung der Erfindung sind in den abhängigen Ansprüchen angegeben.

Erfindungsgemäß ist demnach eine Anschlussdose, insbesondere für ein Daten- oder Kommunikationsnetz, mit einem Gehäuse, wobei das Gehäuse ein Bodenteil und ein schwenkbar am Bodenteil angeordnetes Deckelteil, umfasst, wobei das Gehäuse zwischen einer geöffneten und einer geschlossenen Position bewegbar ist und das Gehäuse eine Öffnung aufweist. Das Deckelteil weist eine erste Dichtung und das Bodenteil eine zweite Dichtung auf, wobei die erste Dichtung und die zweite Dichtung zumindest teilweise aus einem verformbaren Material gebildet sind. Die erste Dichtung oder die zweite Dichtung verschließt die Öffnung in der geschlossenen Position des Gehäuses zumindest annähernd. In der geschlossenen Position übt die zweite Dichtung auf die die Öffnung zumindest annähernd verschließende erste Dichtung eine Kraft aus, oder in der geschlossenen Position übt die erste Dichtung auf die die Öffnung zumindest annähernd verschließende zweite Dichtung eine Kraft aus.

Die Erfindung beruht auf der Idee, eine Anschlussdose mit einer ersten und einer zweiten Dichtung bereitzustellen, wobei eine der Dichtungen eine oder mehrere Öffnungen des Gehäuses verschließt, sodass insbesondere ein Prüfdraht mit einem Durchmesser von 1 mm nicht durch die Öffnung in einen Innenraum des Gehäuses eingeführt werden kann, wodurch die Schutzart IP4X eingehalten werden kann.

Ferner liegt der Erfindung der Gedanke zugrunde, dass die erste oder zweite Dichtung eine Kraft auf die jeweils verschließende korrespondierende Dichtung ausübt, sodass ein etwaiger Prüfdraht die die Öffnung zumindest annähernd vollständig verschließende Dichtung nicht verschieben oder verformen kann, sodass dieser Prüfdraht nicht in den Innenraum des Gehäuses eingeschoben werden kann.

Darüber hinaus liegt der Erfindung der Gedanke zugrunde, dass durch die Öffnung im geöffneten Zustand der Anschlussdose ein Kabel eingelegt bzw. eingeführt werden kann, wobei sich die erste Dichtung und die zweite Dichtung in der geschlossenen Position optimal um das Kabel schmiegen können, wodurch der Schutz gegen allseitiges Spritzwasser auch in der geschlossenen Position mit eingeführtem Kabel erreicht werden kann.

Im Zusammenhang mit dieser Erfindung ist die Einführrichtung als diejenige Richtung definiert, in welche das Kabel durch die Öffnung in den Innenraum des Gehäuses eingeführt wird, wobei die Einführrichtung einen Richtungsvektor aufweist, der eine Ebene der Öffnung der Anschlussdose orthogonal schneidet. Die Einführrichtung eines Kabels kann auch die Ebene der Öffnung in einem Winkel kleiner 10° schneiden.

Bevorzugterweise verschließt die erste Dichtung oder die zweite Dichtung in der geschlossenen Position des Gehäuses die Öffnung vollständig. In der geschlossenen Position übt die zweite Dichtung auf die die Öffnung vollständig verschließende erste Dichtung eine Kraft aus, oder in der geschlossenen Position übt die erste Dichtung auf die die Öffnung vollständig verschließende zweite Dichtung eine Kraft aus. Das hat den Vorteil, dass der Innenraum des Gehäuses vollständig abgedichtet ist gegenüber äußeren Umwelteinflüssen.

Im Zusammenhang mit dieser Erfindung meint vollständig verschließt, dass die erste oder zweite Dichtung unmittelbar an der gesamten Fläche der Öffnung anliegt und diese vollständig abdichtet.

Vorteilhafterweise weist die Öffnung eine Einführrichtung auf, wobei die zweite Dichtung zumindest teilweise in Richtung der Einführrichtung hinter der ersten Dichtung angeordnet ist, wobei vorzugsweise die erste Dichtung die Öffnung im geschlossenen Zustand vollständig verschließt. Dadurch kann die zweite Dichtung einem eventuell einzuführenden Gegenstand, der direkt auf die erste Dichtung einwirkt, entgegenwirken und insbesondere verhindern, dass die erste Dichtung verformt wird, so dass der Gegenstand in den Innenraum des Gehäuses eindringen kann. Beispielsweise kann die erste Dichtung einen Vorsprung in Form einer Schließlippe aufweisen, wobei der Vorsprung der ersten Dichtung bevorzugterweise zumindest einen Teilbereich der Öffnung mit abdecken kann und unmittelbar an der Öffnung anliegen kann, wobei die zweite Dichtung eine Wirkverbindung mit dem Vorsprung aufweist, so dass ein Umklappen des Vorsprungs nicht ohne weiteres möglich ist. Dadurch, dass die erste Dichtung einen Vorsprung ausbilden kann, kann hinter dem Vorsprung ein Freiraum ausgebildet sein, wobei innerhalb des Freiraums die erste Dichtung angeordnet sein kann. Verschließt die zweite Dichtung die Öffnung vollständig, so kann die zweite Dichtung gleich wie die zuvor beschriebene erste Dichtung ausgebildet und angeordnet sein.

Bevorzugterweise weist die Öffnung eine Einführrichtung auf, wobei die zweite Dichtung vollständig in Richtung der Einführrichtung hinter der ersten Dichtung angeordnet ist. Dadurch kann ein Verformen oder Umklappen der die Öffnung verschließenden ersten Dichtung verhindert werden, wobei die geometrische Ausgestaltung der ersten Dichtung und der zweiten Dichtung besonders einfach ausfallen kann. Verschließt die zweite Dichtung die Öffnung vollständig, so kann die zweite Dichtung gleich wie die zuvor beschriebene erste Dichtung ausgebildet und angeordnet sein.

Gemäß einer vorteilhaften Ausgestaltung der Erfindung weist die erste Dichtung oder die zweite Dichtung wenigstens eine Seitenfläche auf, die annähernd parallel zur Ebene der Öffnung angeordnet ist. Vorzugsweise ist die Ebene der Öffnung planar ausgebildet. Damit die Öffnung nahezu vollständig von der ersten Dichtung oder der zweiten Dichtung verschlossen wird, sollte zumindest die unmittelbar an die Öffnung angrenzende Seitenfläche die gleiche geometrische Form und Größe aufweisen. Die Dichtung kann darüber hinaus auch etwas größer als die Öffnung ausgebildet sein. Bei einer planaren Ebene der Öffnung ist vorzugsweise zumindest eine Seitenfläche der ersten oder zweiten Dichtung parallel und damit planar zur Ebene der Öffnung angeordnet und ausgebildet. Bei einer gekrümmten Ebene der Öffnung kann es bevorzugt sein, dass die unmittelbar angrenzende Seitenfläche der ersten oder zweiten Dichtung ebenfalls gekrümmt ausgebildet ist.

Nach einer besonders bevorzugten Weiterbildung der Erfindung weisen die erste Dichtung und die zweite Dichtung dieselbe geometrische Form, vorzugsweise dieselbe geometrische Identität, auf. Dadurch kann der Beschaffungsprozess der Dichtungen vergünstigt werden und/oder der Herstellungsprozess der Dichtungen kann vereinfacht und beschleunigt werden.

Vorteilhafterweise sind die erste Dichtung und zweite Dichtung quaderförmig ausgebildet. Quaderförmige Bauteile können sich durch ihre einfache Handhabung beim Zusammensetzen der Anschlussdose auszeichnen. Zudem handelt es sich bei quaderförmigen Bauteilen um ein Standardprodukt, das in einer Vielzahl von Anwendungen eingesetzt werden kann, was sich positiv auf die Kosten auswirken kann. Bei quaderförmigen Dichtungen weist ein Querschnitt der Dichtungen bevorzugterweise die Form eines Rechtecks oder eines Quadrats auf.

Der Querschnitt der ersten Dichtung oder der zweiten Dichtung ist vorzugsweise im Zusammenhang mit der vorliegenden Erfindung diejenige Fläche, die einen Normalenvektor aufweist, der den Richtungsvektor der Einführrichtung orthogonal schneidet.

Nach einer weiteren vorteilhaften Ausgestaltung der Erfindung weist die erste und/oder zweite Dichtung einen runden, vieleckigen, insbesondere fünfeckigen, trapezförmigen, konischen, parallelogrammförmigen oder dreieckigen Querschnitt auf. Der Querschnitt kann entlang seiner Längsachse unterschiedlich ausgebildet sein. Beispielsweise kann sich die erste und/oder zweite Dichtung entlang der Längsachse der ersten und/oder zweiten Dichtung verjüngen oder verbreitern.

Nach einer weiteren Ausgestaltung der Erfindung sind die erste Dichtung und die zweite Dichtung unterschiedlich ausgebildet.

Beispielsweise kann die erste Dichtung eine quaderförmige Form und die zweite Dichtung eine zylinderförmige Form aufweisen. Insbesondere kann die erste Dichtung auch die Form eines Quaders aufweisen und die zweite Dichtung die Form eines Fünfecks, wobei ein abgewinkelter Bereich des Fünfecks mit einer Seitenfläche des Quaders eine Wirkverbindung bevorzugterweise eingehen kann.

Bevorzugterweise sind die erste Dichtung und die zweite Dichtung in der geschlossenen Position verkippt zueinander angeordnet. Durch das Verkippen sind die erste Dichtung und die zweite Dichtung, die bevorzugterweise quaderförmig ausgebildet sind, schräg zueinanderstehend angeordnet. Das Kippen bzw. Schrägstellen der ersten oder zweiten Dichtung hat den Vorteil, dass die die Öffnung verschließende Dichtung von der anderen Dichtung in Richtung der Öffnung gedrückt wird, wodurch die erste und zweite Dichtung zusammen die Öffnung besser verschließen. Zudem kann dadurch in der geschlossenen Position ein etwaiger Prüfdraht erschwert oder gar nicht zwischen den aufeinander wirkenden Flächen der ersten und zweiten Dichtung in den Innenraum der Anschlussdose geschoben werden.

Bevorzugterweise spannen im unbelasteten Zustand die quaderförmige erste Dichtung ein erstes dreidimensionales kartesisches Koordinatensystem und die quaderförmige zweite Dichtung ein zweites dreidimensionales kartesisches Koordinatensystem auf, wobei die Achsen der Koordinatensysteme parallel zu den Seitenflächen der jeweiligen ersten Dichtung und zweiten Dichtung verlaufen, wobei in der geschlossenen Position zwei der Achsen des ersten Koordinatensystem gegenüber den komplementären Achsen des zweiten Koordinatensystems einen Winkel zueinander aufweisen, wobei bei der Betrachtung der kartesischen Koordinatensysteme so getan wird, als wäre die erste Dichtung und die zweite Dichtung unbelastet.

Gemäß einer vorteilhaften Weiterbildung der Erfindung weisen in der geschlossenen Position zwei der vorzugsweise senkrecht aufeinander stehenden Achsen des ersten Koordinatensystems gegenüber den komplementären Achsen des zweiten Koordinatensystems einen Winkel von mindestens 10°, vorzugsweise von mindestens 20°, ganz besonders bevorzugt von mindestens 45°, zueinander auf. Je schräger die erste und zweite Dichtung zueinander stehen, desto größer ist die Kraft, die eine Dichtung auf die die Öffnung verschließende Dichtung ausübt. Dadurch wird die Öffnung besser gegenüber Schmutz und Feuchtigkeit abgedichtet.

Nach einer vorteilhaften Ausgestaltung der Erfindung ist die erste Dichtung und/oder die zweite Dichtung, insbesondere eine Seitenfläche der ersten und/oder zweiten Dichtung gegenüber der Ebene der Öffnung verkippt. Insbesondere weist eine Seitenfläche der ersten und/oder zweiten Dichtung einen Winkel, vorzugsweise einen Winkel größer gleich 15°, gegenüber der Ebene der Öffnung auf.

Gemäß einer vorteilhaften Weiterbildung der Erfindung weist das Gehäuse mehrere Öffnungen auf, die durch die erste Dichtung oder die zweite Dichtung verschlossen sind. Häufig sind in einer Anschlussdose zwei oder mehr Kabel mit den entsprechenden Schnittstellen verbunden. Vorteilhafterweise wird in jede Öffnung ein Kabel in den Innenraum des Gehäuses geführt. Durch die Verbindungsmöglichkeiten zweier Kabel innerhalb des einen Gehäuses der Anschlussdose, können mehrere Schnittstellen auf geringerem Bauraum verschaltet werden. Es kann auch jede Öffnung durch eine eigene erste Dichtung und eine zweite Dichtung verschlossen sein.

Nach einer besonders bevorzugten Ausgestaltung der Erfindung sind die erste Dichtung und die zweite Dichtung zumindest teilweise aus Schaumstoff gebildet. Die erste Dichtung und die zweite Dichtung sind vorzugsweise aus Polyurethan, Polyethylen, Silikonschaum, Neoprenschaum oder PVC-Schaum ausgebildet. Vorteilhaft an Schaumstoff ist, dass es äußerst leicht, günstig, flexibel und Wasser- und Feuchtigkeitsbeständig ist.

Vorteilhafterweise ist zwischen Deckelteil und Bodenteil ein Federelement angeordnet, welches derart vorgespannt ist, dass es das Deckelteil selbstschließend aus der geöffneten Position in die geschlossene Position überführt. Durch das Federelement wird bewerkstelligt, dass die Anschlussdose stets in die geschlossene Position überführt werden kann, so dass ein versehentliches Offenstehen der Anschlussdose vermieden werden kann.

Bevorzugterweise weist die Anschlussdose ein Arretierelement auf, sodass das Deckelteil im arretierten Zustand in der geöffneten Position verbleibt. Dadurch ist ein Bearbeitungsprozess oder Montageprozess der Anschlussdose möglich, ohne das Deckelteil von Hand aufhalten zu müssen.

Bevorzugterweise ist die Anschlussdose als elektrische oder optische Anschlussdose, insbesondere als abschließbare elektrische oder optische Anschlussdose, ausgebildet. Ganz besonders bevorzugt ist die Anschlussdose als RJ45-Anschlussdose ausgebildet.

Im Folgenden wird ein Ausführungsbeispiel der Erfindung anhand von Figuren erläutert. Es zeigen:
- Fig. 1: eine perspektivische Ansicht eines Ausführungsbeispiels einer Anschlussdose mit einem Bodenteil mit einer zweiten Dichtung und einem schwenkbar am Bodenteil angeordneten Deckelteil mit einer ersten Dichtung in einer geöffneten Position,
- Fig. 2: eine Seitenansicht der Anschlussdose gemäß Fig. 1 in einer Zwischenposition,
- Fig. 3: eine Seitenansicht der Anschlussdose gemäß Fig. 2 in der geschlossenen Position, wobei die erste und zweite Dichtung trotz geschlossenem Deckelteil aus Darstellungsgründen im unbelasteten Zustand gestrichelt dargestellt sind, und
- Fig. 4: eine Seitenansicht der Anschlussdose gemäß Fig. 3 in der geschlossenen Position, wobei eine Kabelführung durch die Anschlussdose angedeutet ist.

In den nachfolgenden Figuren bezeichnen gleiche Bezugszeichen gleiche Teile mit gleicher Bedeutung.

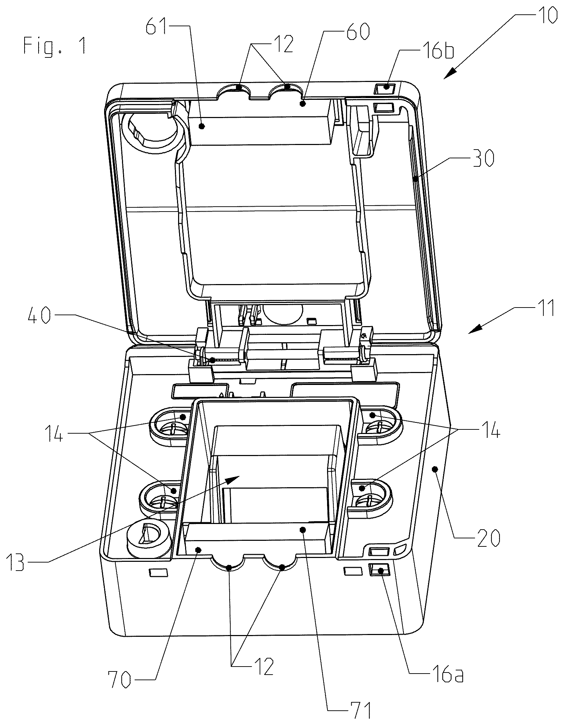

Die Figur 1 zeigt eine erfindungsgemäße Anschlussdose 10 mit einem Gehäuse 11.

Das Gehäuse 11 weist ein Bodenteil 20 und ein Deckelteil 30 auf, wobei das Deckelteil 30 zwischen einer geschlossenen und einer geöffneten Position schwenkbar an dem Bodenteil 20 angeordnet ist. In der geschlossenen Position umschließt das Gehäuse 11 einen Innenraum 13. Das Gehäuse 11 weist mindestens eine Öffnung 12, vorzugsweise zwei Öffnungen 12 auf, durch welche jeweils ein Kabel (nicht zu sehen) in den Innenraum 13 des Gehäuses 11 eingeführt wird. Das Gehäuse 11 weist einen quadratischen Umriss auf. Der Umriss des Gehäuses 11 kann auch einen rechteckförmigen oder runden Umriss oder einen jeglichen anderen Umriss aufweisen.

Im Bodenteil 20 sind Ausnehmungen 14 angeordnet, durch welche Fixierungsmittel, insbesondere Schrauben (nicht zu sehen), zur Befestigung der Anschlussdose 20 z.B. an einer Wand (nicht zu sehen) oder einem weiteren Unterteil geführt werden können.

Es besteht die Möglichkeit, die Anschlussdose 20 abschließbar zu gestalten, beispielsweise durch zwei korrespondierende Ausnehmungen 16a, 16b, von denen eine Ausnehmung 16a im Bodenteil 20 und die andere Ausnehmung 16b im Deckelteil 30 angeordnet ist und durch welche beispielsweise eine Plombe (nicht zu sehen) geführt wird.

Das Bodenteil 20 und das Deckelteil 30 weisen denselben Umriss auf. Bevorzugterweise ist der Umriss des Bodenteils und des Deckelteils rechteckig oder quadratisch ausgebildet.

Das Deckelteil 30 und das Bodenteil 20 bilden gemeinsam in der geschlossenen Position die beiden Öffnungen 12 aus, indem ein Teil der Öffnung 12 im Bodenteil 20 und der andere Teil derselben Öffnung 12 im Deckelteil 30 ausgebildet sind. Diese Öffnungen 12 sind vorliegend sowohl im Deckelteil 30 und Bodenteil 20 halbkreisförmig beabstandet und fluchtend zueinander ausgebildet. Die Öffnung 12 oder die Öffnungen 12 können auch durch das Bodenteil 20 alleine oder durch das Deckelteil 30 alleine ausgebildet sein.

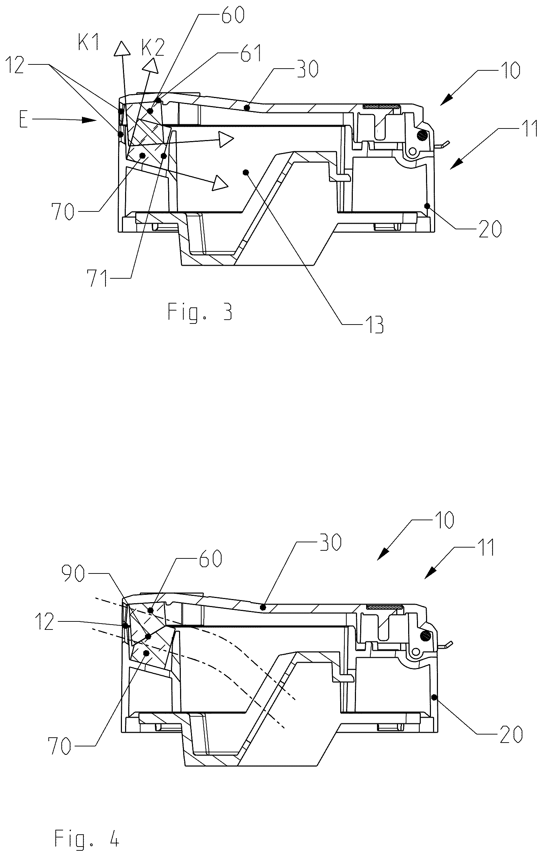

Zwischen dem Bodenteil 20 und dem Deckelteil 30 ist ein Federelement 40 angeordnet. Das Federelement 40 ist derart ausgebildet, dass es das Deckelteil 30 aus einer geöffneten Position (vgl. Figur 1) in eine geschlossene Position (vgl. Figur 3) überführt, sofern keine der Federkraft des Federelements 40 entgegenwirkende Kraft vorhanden ist. Gegen die Federkraft des Federelements 40 kann das Deckelteil 30 aus der geschlossenen Position in die geöffnete Position überführt werden. Das Federelement 40 kann beispielsweise als Schraubenfeder um eine Schwenkachse zwischen Bodenteil 20 und Deckelteil 30 angeordnet sein und sich einenends an dem Bodenteil 20 und anderenends an dem Deckelteil 30 abstützen.

Um das Deckelteil 30 in der geöffneten Position arretieren zu können, kann ein Arretierelement (nicht zu sehen) vorgesehen sein. Das Arretierelement ist vorzugsweise innerhalb der Anschlussdose angeordnet. Das Arretierelement kann an einem Ende schwenkbar am Bodenteil 20 gelagert sein und kann am anderen Ende eine Anschlagfläche aufweisen, wobei das Arretierelement in der geöffneten Position das Deckelteil 30 gegen die Federkraft des Federelements 40 arretiert. Im nicht arretierten Zustand kann das Arretierelement das Überführen des Deckelteils 30 aus der geöffneten Position in die geschlossene Position erlauben.

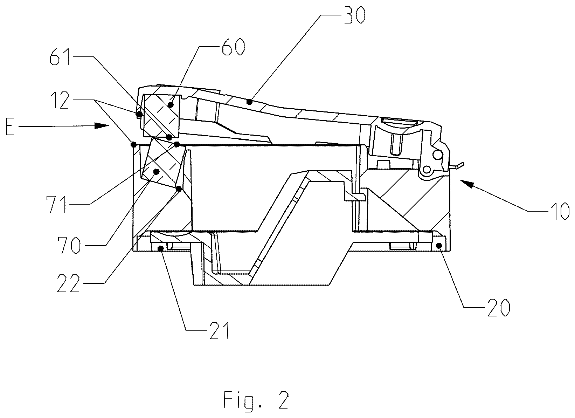

Das Deckelteil 30 weist eine erste Dichtung 60 und das Bodenteil 20 eine zweite Dichtung 70 auf, wobei die erste Dichtung 60 und die zweite Dichtung 70 quaderförmig ausgebildet sind und einen rechteckförmigen Querschnitt (vgl. Fig. 2) aufweisen.

In Fig. 2 ist eine Seitenansicht der Anschlussdose 10 gemäß Fig. 1 in einer Zwischenposition gezeigt, in welcher sich die erste Dichtung 60 und die zweite Dichtung 70 gerade erst an einer Stelle berühren.

Die Zwischenposition meint im Vorherigen, hier und im Folgenden, dass sich die Anschlussdose 10 weder in der geschlossenen Position noch in der geöffneten Position befindet. Zumeist befindet sich die Anschlussdose 10 dann in einer Zwischenposition, wenn die Anschlussdose 10 aus der geöffneten Position in die geschlossene Position überführt wird oder vice versa.

Die erste Dichtung 60, welche im Deckelteil 30 angeordnet ist, ist wie bereits erwähnt quaderförmig ausgebildet, wobei der Querschnitt der ersten Dichtung 60 rechteckförmig ausgebildet ist. Die erste Dichtung 60 kann einen jeden Querschnitt aufweisen. Beispielsweise kann der Querschnitt der ersten Dichtung 60 rund, quadratisch, trapezförmig oder vieleckig sein. Die erste Dichtung 60 ist bevorzugterweise aus einem zumindest teilweise verformbaren Material ausgebildet. Besonders bevorzugt ist die erste Dichtung 60 aus Polyurethan, Polyethylen, Silikonschaum, Neoprenschaum oder PVC-Schaum ausgebildet.

Die erste Dichtung 60 ist mit dem Deckelteil 30 mechanisch verbunden. Beispielsweise kann die erste Dichtung 60 über eine Klebeverbindung mit dem Deckelteil 30 mechanisch verbunden sein. Die erste Dichtung 60 kann auch in dem Deckelteil 30 verklemmt sein. Auch kann die erste Dichtung 60 über eine Schraubverbindung mit dem Deckelteil 30 mechanisch verbunden sein.

Die erste Dichtung 60 erstreckt sich vorzugsweise über die gesamte Ebene der Öffnung 12 und gegebenenfalls darüber hinaus, wobei die erste Dichtung 60 die Öffnung 12 in der geschlossenen Position vollständig verschließt oder zumindest annähernd verschließt. Die erste Dichtung 60 weist dabei bevorzugterweise eine Seitenfläche 61 auf, die vorzugsweise parallel zu der Ebene der Öffnung 12 angeordnet ist. Die Ebene der Öffnung 12 ist planar ausgebildet, sodass die Seitenfläche 61 der ersten Dichtung 60, die unmittelbar angrenzend zur Öffnung 12 angeordnet ist, ebenfalls planar ausgebildet ist. Bevorzugterweise überragt die erste Dichtung 60 die Öffnung 12 oder die Öffnungen 12 vollständig. Insbesondere kann die erste Dichtung 60 die Kantenbereiche einer Öffnung 12 vollständig überragen. Die erste Dichtung 60 ist zu einem Boden 21 des Bodenteils 20 näher angeordnet als die Öffnung 12 oder die Öffnungen 12 zu dem Boden 21 des Bodenteils 20.

Die zweite Dichtung 70, welche im Bodenteil 20 angeordnet ist, ist wie bereits erwähnt, quaderförmig ausgebildet, wobei der Querschnitt der zweiten Dichtung 70 rechteckförmig ausgebildet ist. Die zweite Dichtung 70 kann prinzipiell auch einen jeden anderen Querschnitt aufweisen, beispielsweise kann der Querschnitt der zweiten Dichtung rund, quadratisch, trapezförmig oder vieleckig sein. Vorzugsweise ist bei einem vieleckigen Querschnitt, der Querschnitt fünfeckig ausgebildet, wobei der Querschnitt zwei abgewinkelte Seitenflächen 71 aufweist, die in Richtung der ersten Dichtung 60 zeigen.

Die zweite Dichtung 70 ist mit dem Bodenteil 20 mechanisch verbunden. Beispielsweise kann die zweite Dichtung 70 über eine Klebeverbindung mit dem Bodenteil 20 mechanisch verbunden sein. Die zweite Dichtung 70 kann auch in dem Bodenteil 20 verklemmt sein und damit mit dem Bodenteil 20 mechanisch fixiert sein. Auch kann die zweite Dichtung 70 über eine Schraubverbindung mit dem Bodenteil 20 mechanisch verbunden sein. Die zweite Dichtung 70 ist bevorzugterweise aus einem zumindest teilweise verformbaren Material ausgebildet. Besonders bevorzugt ist die zweite Dichtung 70 aus Polyurethan, Polyethylen, Silikonschaum, Neoprenschaum oder PVC-Schaum ausgebildet.

Die zweite Dichtung 70 ist schräg innerhalb des Bodenteils 20 angeordnet, wobei die zweite Dichtung 70 bevorzugterweise auf einem abfallenden Plateau 22 des Bodenteils 20 fixiert, vorzugsweise angeklebt, ist. Die zweite Dichtung 70, insbesondere eine Seitenfläche 71 der zweiten Dichtung 70, weist gegenüber dem Richtungsvektor der Einführrichtung E einen Winkel auf, der verschieden zu 0° und 90° ist.

In Fig. 3 ist eine Seitenansicht der Anschlussdose 10 gemäß Fig. 2 in der geschlossenen Position gezeigt. Die erste Dichtung 60 und die zweite Dichtung 70 sind aus Darstellungsgründen trotz der geschlossenen Position aus darstellungstechnischen Gründen der Einfachheit wegen in ihrem unbelasteten, unverformten Zustand gezeigt.

Die erste Dichtung 60, welche vorzugsweise quaderförmig ausgebildet ist, spannt ein erstes dreidimensionales kartesisches Koordinatensystem K1 (im Folgenden erstes Koordinatensystem K1) auf, wobei die Achsen des ersten Koordinatensystems K1 parallel zu den Seitenflächen 61 der ersten Dichtung 60 im unbelasteten Zustand verlaufen.

Die zweite Dichtung 70, welche vorzugsweise quaderförmig ausgebildet ist, spannt ein zweites dreidimensionales kartesisches Koordinatensystem K2 (im Folgenden zweites Koordinatensystem K2) auf, wobei die Achsen des zweiten Koordinatensystems K2 parallel zu den Seitenflächen 71 der zweiten Dichtung 70 im unbelasteten Zustand verlaufen. Sind die erste Dichtung 60 und die zweite Dichtung 70 geometrisch gleich ausgebildet, so werden die Achsen denselben Seitenflächen 61, 71 der ersten Dichtung 60 und der zweiten Dichtung 70 zugeordnet. Es versteht sich, dass sich die erste Dichtung 60 und die zweite Dichtung 70, insbesondere die aufeinander einwirkenden Seitenflächen 61, 71, verformen. Bei der Betrachtung des ersten Koordinatensystems K1 und des zweiten Koordinatensystems K2 und deren Stellung zueinander soll im Vorherigen, hier und im Folgenden stets der unbelastete Zustand betrachtet werden, auch dann, wenn die erste Dichtung 60 und die zweite Dichtung 70, insbesondere deren Seitenflächen 61, 71, verformt sind.

In der geschlossenen Position weisen zumindest zwei der Achsen des ersten Koordinatensystems K1 gegenüber den komplementären Achsen des zweiten Koordinatensystems K2 einen Winkel zueinander auf. Bei einer bevorzugten quaderförmigen Ausgestaltung der ersten Dichtung 60 und der zweiten Dichtung 70, übt die zweite Dichtung 70 eine Kraft auf die erste Dichtung 60 aus, wobei die Kraft in Richtung der Öffnung 12 gerichtet ist. Das hat den Vorteil, dass ein ungewolltes durch die Öffnung 12 potentiell einzuführendes Objekt nicht in der Lage ist, die erste Dichtung 60 beiseite zu schieben oder zu verformen, sodass das Objekt in den Innenraum 13 des Gehäuses 11 eindringen könnte.

Vorzugsweise weisen zwei der senkrecht aufeinander stehenden Achsen des ersten Koordinatensystems K1 gegenüber den komplementären Achsen des zweiten Koordinatensystems K2 einen Winkel von mindestens 10°, vorzugsweise von mindestens 20°, ganz besonders bevorzugt von mindestens 45°, zueinander auf. Je schräger die erste Dichtung 60 und die zweite Dichtung 70 zueinander stehen, desto größer ist die Kraft, die eine Dichtung 60, 70 auf die die Öffnung 12 verschließende Dichtung 60, 70 ausübt. Dadurch wird die Öffnung 12 besser gegenüber Schmutz und Feuchtigkeit abgedichtet. Es versteht sich, dass die Achsen des ersten Koordinatensystems K1 und des zweiten Koordinatensystems K2 nicht, wie in Abb. 3 dargestellt, endlich sind, sondern unendlich fortgesetzt werden.

Die zweite Dichtung 70 kann auch zumindest teilweise in Richtung der Einführrichtung E hinter der ersten Dichtung 60 angeordnet sein. Beispielsweise weisen das erste Koordinatensystem K1 und das zweite Koordinatensystem K2, insbesondere deren Achsen, keinen oder nahezu keinen Winkel zueinander auf. Die zweite Dichtung 70 kann dabei einen Vorsprung in Form einer Schließlippe ausbilden, wobei durch den Vorsprung ein Freiraum ausgebildet wird, in welchen sich die zweite Dichtung 70 einschmiegen kann. Die zweite Dichtung 70 kann auch vollständig in Richtung der Einführrichtung E hinter der ersten Dichtung 60 angeordnet sein.

In Fig. 4 ist eine Seitenansicht der Anschlussdose 10 gemäß Fig. 3 in der geschlossenen Position gezeigt, wobei eine Kabelführung durch die Anschlussdose durch Strichlinien angedeutet ist.

Die erste Dichtung 60 und die zweite Dichtung 70 sind in Fig. 4 im belasteten und verformten Zustand gezeigt. Die zweite Dichtung 70 wirkt auf die erste Dichtung 60 ein, sodass sich die erste Dichtung 60 und die zweite Dichtung 70 verformen, wobei die zweite Dichtung 70 auf die erste Dichtung 60 eine Kraft ausübt, die mindestens einen Richtungsvektor in Richtung der Öffnung 12 aufweist. Die Verformung der ersten Dichtung 60 und der zweiten Dichtung 70 ist idealisiert mit einem linearen Verformungsbereich 90 dargestellt. Neben einem linearen Verformungsbereich 90 sind auch andere, insbesondere ein parabelförmiger, Verformungsbereich 90 denkbar.

Die Anschlussdose 10 aus den Figuren 1 bis 4 kann auch als elektrische oder optische Anschlussdose ausgebildet sein, insbesondere als verschließbare elektrische oder optische RJ45-Anschlussdose.

### Bezugszeichenliste

- 10: Anschlussdose
- 11: Gehäuse
- 12: Öffnung
- 13: Innenraum

- 16a: Ausnehmung
- 16b: Ausnehmung

- 20: Bodenteil
- 21: Boden
- 22: Plateau

- 30: Deckelteil

- 40: Federelement

- 50: Arretierelement

- 60: Erste Dichtung
- 61: Seitenfläche

- 70: Zweite Dichtung
- 71: Seitenfläche

- 90: Verformungsbereich

- K1: Erstes Koordinatensystem
- K2: Zweites Koordinatensystem

- E: Einführrichtung

## Patentansprüche

1. Anschlussdose (10), insbesondere für ein Daten- oder Kommunikationsnetz, aufweisend:
- ein Gehäuse (11), wobei das Gehäuse (11) ein Bodenteil (20) und ein schwenkbar am Bodenteil (20) angeordnetes Deckelteil (30), umfasst, wobei das Gehäuse (10) zwischen einer geöffneten und einer geschlossenen Position bewegbar ist,
- das Gehäuse (10) weist eine Öffnung (12) auf,
- das Deckelteil (30) weist eine erste Dichtung (60) und das Bodenteil (20) eine zweite Dichtung (70) auf, wobei die erste Dichtung (60) und die zweite Dichtung (70) zumindest teilweise aus einem verformbaren Material gebildet sind,
**gekennzeichnet dadurch, dass**
- die erste Dichtung (60) oder die zweite Dichtung (70) in der geschlossenen Position des Gehäuses (11) die Öffnung (12) zumindest annähernd verschließt, und
- dass in der geschlossenen Position die zweite Dichtung (70) auf die die Öffnung (12) zumindest annähernd verschließende erste Dichtung (60) eine Kraft ausübt,
- oder dass in der geschlossenen Position die erste Dichtung (60) auf die die Öffnung (12) zumindest annähernd verschließende zweite Dichtung (70) eine Kraft ausübt.

2. Anschlussdose (10) nach Anspruch 1, **dadurch gekennzeichnet, dass** die erste Dichtung (60) oder die zweite Dichtung (70) in der geschlossenen Position des Gehäuses (11) die Öffnung (12) vollständig verschließt, und dass in der geschlossenen Position die zweite Dichtung (70) auf die die Öffnung (12) vollständig verschließende erste Dichtung (60) eine Kraft ausübt, oder dass in der geschlossenen Position die erste Dichtung (60) auf die die Öffnung (12) vollständig verschließende zweite Dichtung (70) eine Kraft ausübt

3. Anschlussdose (10) nach einem der vorherigen Ansprüche, **dadurch gekennzeichnet, dass** die Öffnung (12) eine Einführrichtung (E) aufweist, wobei die zweite Dichtung (70) zumindest teilweise in Richtung der Einführrichtung (E) hinter der ersten Dichtung (60) angeordnet ist.

4. Anschlussdose (10) einem der vorherigen Ansprüche, **dadurch gekennzeichnet, dass** die Öffnung (12) eine Einführrichtung (E) aufweist, wobei die zweite Dichtung (70) vollständig in Richtung der Einführrichtung (E) hinter der ersten Dichtung (60) angeordnet ist.

5. Anschlussdose (10) nach einem der vorherigen Ansprüche, **dadurch gekennzeichnet, dass** die erste Dichtung (60) oder die zweite Dichtung (70) zumindest eine Seitenfläche (61) aufweist, die ungefähr parallel zu einer Ebene der Öffnung (12) angeordnet ist.

6. Anschlussdose (10) nach einem der vorherigen Ansprüche, **dadurch gekennzeichnet, dass** die erste Dichtung (60) und die zweite Dichtung (70) dieselbe geometrische Form, vorzugsweise dieselbe geometrische Identität, aufweisen.

7. Anschlussdose (10) nach einem der vorherigen Ansprüche, **dadurch gekennzeichnet, dass** die erste Dichtung (60) und zweite Dichtung (70) quaderförmig ausgebildet sind.

8. Anschlussdose (10) nach Anspruch 7, **dadurch gekennzeichnet, dass** die erste Dichtung (60) und die zweite Dichtung (70) in der geschlossenen Position verkippt zueinander angeordnet sind.

9. Anschlussdose (10) nach einem der vorherigen Ansprüche, **dadurch gekennzeichnet, dass** das Gehäuse (11) mehrere Öffnungen (12) aufweist, die durch die erste Dichtung (60) oder die zweite Dichtung (70) verschlossen sind.

10. Anschlussdose (10) nach einem der vorherigen Ansprüche, **dadurch gekennzeichnet, dass** die erste Dichtung (60) und die zweite Dichtung (70) zumindest teilweise aus Schaumstoff gebildet sind.

11. Anschlussdose (10) nach einem der vorherigen Ansprüche, **dadurch gekennzeichnet, dass** zwischen Deckelteil (30) und Bodenteil (20) ein Federelement (40) angeordnet ist, welches derart vorgespannt ist, dass es das Deckelteil (30) selbstschließend aus der geöffneten Position in die geschlossene Position überführt.

12. Anschlussdose (10) nach einem der vorherigen Ansprüche, **dadurch gekennzeichnet, dass** die Anschlussdose (10) als elektrische oder optische Anschlussdose, insbesondere als abschließbare elektrische oder optische Anschlussdose, ausgebildet ist.
